# EUROPÄISCHE PATENTSCHRIFT

(11) **EP 1 588 065 B1**
(45) Veröffentlichungstag und Bekanntmachung des Hinweises auf die Patenterteilung: **09.01.2008**
(21) Anmeldenummer: 04700990.7
(22) Anmeldetag: 09.01.2004
(51) Int. Cl.: F16C 27/06, F16F 1/36, B60G 13/00

(54) **DÄMPFERLAGER**
DAMPER BEARINGS
PALIERS AMORTISSEURS

(30) Priorität: 16.01.2003 DE 10301569
(43) Veröffentlichungstag der Anmeldung: 26.10.2005
(73) Patentinhaber: BASF Aktiengesellschaft, 67056 Ludwigshafen (DE)
(72) Erfinder: THYE-MOORMANN, Frank, 49459 Lembruch (DE); BURLAGE, Thomas, 49134 Wallenhorst (DE); SOBOLEWSKI, Klaus, 49356 Diepholz (DE)
(86) Internationale Anmeldenummer: PCT/EP2004/000083
(87) Internationale Veröffentlichungsnummer: WO 2004/063583

(56) Entgegenhaltungen:
- WO-A-03/091594
- DE-A- 10 041 359
- DE-U- 20 213 260
- FR-A- 2 829 818
- GB-A- 2 289 109

## Beschreibung

Die Erfindung betrifft Dämpferlager, insbesondere Rundlager enthaltend mindestens einen bevorzugt flachen bevorzugt zylindrischen bevorzugt mit einer mittigen Bohrung versehenen Einleger (i), der in einem bevorzugt zylindrischen Gehäuse (ii) positioniert ist, mindestens zwei bevorzugt zwei bevorzugt zylindrische bevorzugt ringförmige bevorzugt elastische Lagerelemente (iii), die oberhalb und unterhalb des Einlegers (i) positioniert sind und bevorzugt an dem Einleger anliegen, sowie zwischen Einleger (i) und Gehäuse (ii) bevorzugt in Kontakt mit dem Einleger (i) und dem Gehäuse (ii) mindestens ein bevorzugt ringförmiger Artikel (iv) auf der Basis von thermoplastischem Polyurethan. Des weiteren bezieht sich die Erfindung auf Federkonstruktionen insbesondere zur Lagerung und Befestigung der Kolbenstange eines Automobilstoßdämpfers enthaltend eine Kolbenstange (x) an dessen Ende ein bevorzugt flacher bevorzugt zylindrischer bevorzugt mit einer mittigen Bohrung versehener Einleger (i) befestigt ist, bevorzugt mit einer Mutter (v) verschraubt ist, der sich in einem bevorzugt zylindrischen Gehäuse (ii) befindet, das einen seitlichen Rand (vi) und einen unteren Rand (vii) aufweist und dessen obere Öffnung teilweise oder vollständig bevorzugt von einem Deckel (viii) verschlossen ist, gegebenenfalls mit einem Dichtring (xi) zwischen Deckel (viii) und Gehäuse (ii), sowie unterhalb des unteren Randes (vii) des Gehäuses eine hohle zylindrische Zusatzfeder (ix), die die Kolbenstange (x) umschließt, wobei oberhalb und unterhalb des Einlegers (i), bevorzugt zwischen dem Einleger (i) und dem unteren Rand (vii) des Gehäuses (ii) sowie zwischen Einleger (i) und der teilweise oder vollständig verschlossenen Öffnung des Gehäuses, bevorzugt dem Deckel (viii), jeweils mindestens ein bevorzugt zylindrisches bevorzugt ringförmiges bevorzugt elastisches Lagerelement (iii) positioniert ist, sowie zwischen dem Einleger (i) und dem seitlichen Rand (vi) des Gehäuses (ii), bevorzugt in Kontakt sowohl mit dem äußeren Rand des Einlegers (i) als auch der inneren Oberfläche des seitlichen Randes (vi) des Gehäuses (ii), mindestens ein Artikel (iv) auf der Basis von thermoplastischem Polyurethan vorliegt. Außerdem betrifft die Erfindung Automobile oder Lastkraftwagen enthaltend die erfindungsgemäßen Dämpferlager, insbesondere Rundlager.

Dämpferlager werden in Automobilen innerhalb des Fahrwerks z.B. zur Anbindung der Kolbenstange des Stoßdämpfers an die Karosserie des Automobils und bei der Lagerung von Aggregaten verwendet und sind allgemein bekannt. Mit Hilfe von Dämpferlagern werden im Automobil Aggregate, beispielsweise Motor, Getriebe, Luftpresser, Kompressor, oder Fahrwerksbauteile, z.B. Hilfsrahmenlager, Blattfederlager, Lenker, u.a. untereinander oder mit der Karosserie verbunden. Dabei erfüllen sie durch die Verwendung von Elastomerwerkstoffen die Funktion einer elastischen Lagerung; andererseits sind sie auf Grund ihrer viskosen Eigenschaften in der Lage, Energie zu dissipieren und damit Schwingungen zu dämpfen. Dabei wird ein hohes Maß an Dämpfung besonders für die Bedämpfung gro-ßer Amplituden von niederfrequenten Schwingungen benötigt, die z.B. die Anbindung der Stoßdämpfers an die Karosserie beeinflussen. Andererseits ist bei kleinen Amplituden und höheren Frequenzen eine hohe Dämpfung aus Gründen der Fahrzeugakustik unerwünscht. Das Dämpfungsverhalten derzeitiger, konventioneller Rundlager ist abhängig vom materialimmanenten Dämpfungsvermögen des eingesetzten Elastomerwerkstoffes.

Das Deutsche Gebrauchsmuster 020213260 beschreibt Dämpferlager, gemäß dem Oberbegriff von Anspruch 1, bei denen zwischen dem Einleger und der äußeren Hülse sowohl ein in radialer Richtung wirkendes Dämpfungselement als auch eine Gleithülse vorliegen. Die Gleithülse soll dabei die axiale Beweglichkeit des radial dämpfenden Elementes sicherstellen.

Aufgabe der vorliegenden Erfindung war es, Dämpferlager, insbesondere Federkonstruktionen zur Anbindung der Kolbenstange des Automobilstoßdämpfers an die Automobilkarosserie zu entwickeln, bei denen in radialer und axialer Richtung ein bestimmter Verformungsweg mit unterschiedlich definierter Anlaufsteifigkeit realisiert werden kann.

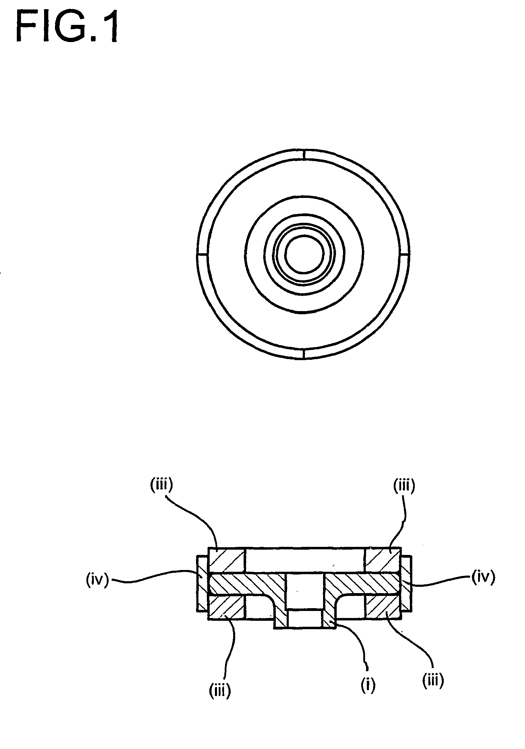

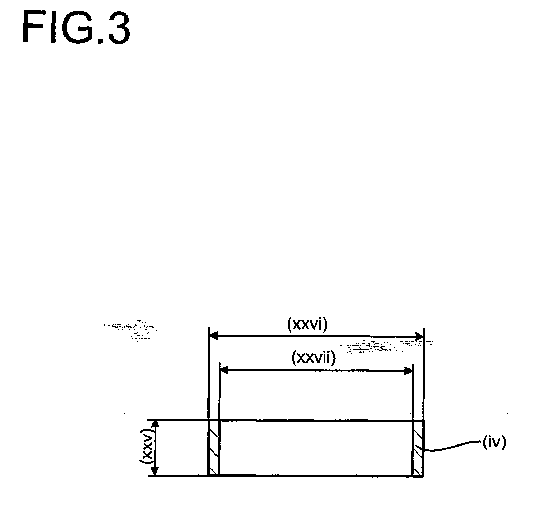

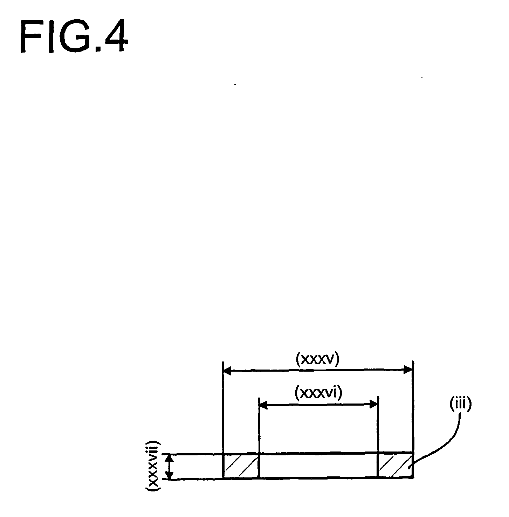

Diese Aufgabe konnte durch die eingangs dargestellten Dämpferlager und Federkonstruktionen gelöst werden. Ein beispielhaftes Dämpferlager, allerdings ohne das an dem thermoplastischen Polyurethan Artikel (iv) anliegende Gehäuse (ii), das bevorzugt von außen den gesamten Artikel (iv) umfasst, ist in der Figur 1 dargestellt. Ein beispielhafter Einleger (i) ist in der Figur 2 abgebildet. Figur 3 stellt den Artikel (iv), in diesem bevorzugten Falle einen Ring, dar. Ein beispielhaftes Lagerelement (iii) ist in Figur 4 beschrieben. Figur 5 stellt beispielhaft eine erfindungsgemäße Federkonstruktion dar. In allen Figur sind die Maße in [mm] angegeben.

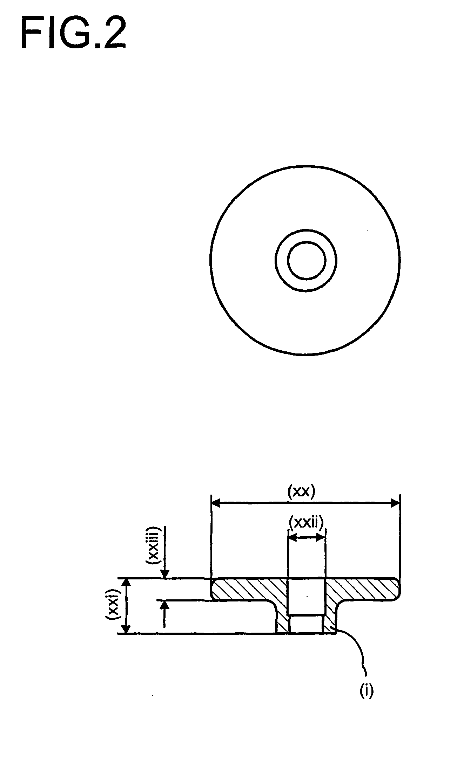

Der bevorzugt zylindrische Einleger (i) kann einteilig oder mehrteilig aufgebaut sein und auf üblichen Materialien basieren, beispielsweise Metallen, z.B. Stahl, Eisen und/oder Aluminium oder harten Kunststoffen, z.B. thermoplastischem Polyurethan (TPU), Polyoxymethylen und/oder Polyamid. Der Einleger (i) verfügt bevorzugt über eine Innenbohrung üblicherweise zur Aufnahme eines Befestigungsbolzen. Der Außendurchmesser ergibt sich aus konstruktiven Gründen. Bevorzugt weist der Einleger (i) wie in Figur 2 dargestellt einen Durchmesser (xx) von 40 mm bis 60 mm, besonders bevorzugt 50 mm bis 55 mm auf. Die Höhe (xxi) des Einlegers (i) beträgt bevorzugt 10 mm bis 20 mm, besonders bevorzugt 15 mm. Der Durchmesser (xxii) der Bohrung in dem Einleger (i) beträgt bevorzugt 8 mm bis 15 mm, besonders bevorzugt 10 mm bis 11 mm. Die Höhe (xxiii) der Kante des Einlegers (i) beträgt bevorzugt 5 mm bis 7 mm.

Das Gehäuse (ii) kann ein- oder mehrteilig, bevorzugt einteilig aufgebaut sein und auf üblichen Materialien basieren, beispielsweise Metallen, z.B. Stahl, Eisen und/oder Aluminium oder harten Kunststoffen, z.B. TPU, Polyoxymethylen und/oder Polyamid. Das Gehäuse (ii) verfügt über einen Außendurchmesser und einen Innendurchmesser, die in den Abmaßen und Ausführungen variieren können. Die Erfindung umfasst sowohl kalibrierte und unkalibrierte Gehäuse (ii). Eine Fixierung der Einzelteile, d.h. Einleger (iii), Lagerelement (iii), Artikel (iv) und Gehäuse (ii) kann beispielsweise durch eine Kalibrierung erreicht werden.

Die Lagerelemente (iii) können jeweils aus einem oder mehreren Einzelteilen, die elastische Eigenschaften aufweisen, bestehen. Durch den Einsatz von Lagerelementen mit beispielsweise unterschiedlicher Dichte kann auf speziellen Anforderungen eingegangen werden. Die Lagerelemente (iii), die oberhalb und unterhalb des Einlegers positioniert sind und den Einleger in axialer Richtung dämpfen, d.h. abfedern sollen, können jeweils unter Spannung zwischen dem Einleger (i) und einer oberen bzw. unteren Begrenzung vorliegen. Ein radiale Federung findet durch die Lagerelemente (iii) erfindungsgemäß nicht statt. Die Dämpfung in radialer Richtung wird durch die thermoplastischen Polyurethane (TPU) des Artikels (iv) wahrgenommen. Die Lagerelemente (iii) sind bevorzugt zylindrisch oder ringförmig ausgestaltet. Bevorzugt beträgt der äußere Durchmesser (xxxv) des Lagerelementes (iii) 30 mm bis 70 mm, besonders bevorzugt 40 mm bis 60 mm, insbesondere 52 mm. Bevorzugt beträgt der innere Durchmesser (xxxvi), d.h: der Durchmesser der Bohrung in dem ringförmigen Lagerelement (iii), 10 mm bis 50 mm, besonders bevorzugt 20 mm bis 40 mm, insbesondere 32 mm. Die Höhe (xxxvii) des Lagerelementes (iii) beträgt bevorzugt 3 mm bis 20 mm, besonders bevorzugt 5 mm bis 15 mm, insbesondere 7 mm. Die erfindungsgemäßen Lagerelemente (iii).und bevorzugt die Zusatzfeder (ix) basieren bevorzugt auf zelligen Polyisocyanat- Polyadditionsprodukten, bevorzugt auf der Basis von zelligen Polyurethanelastomeren, die ggf. Polyharnstoffstrukturen enthalten können, besonders bevorzugt auf der Basis von zelligen Polyurethanelastomeren bevorzugt mit einer Dichte nach DIN 53 420 von 200 bis 1100, bevorzugt 300 bis 800 kg/m³, einer Zugfestigkeit nach DIN 53571 von ≥ 2, bevorzugt 2 bis 8 N/mm², einer Dehnung nach DIN 53571 von ≥ 300, bevorzugt 300 bis 700 % und einer Weiterreißfestigkeit nach DIN 53515 von ≥ 8, bevorzugt 8 bis 25 N/mm. Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm. Besonders bevorzugt besitzen die Elastomere die eingangs dargestellten physikalischen Eigenschaften. Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771. Elastomere von zelligen Polyisocyanat-Polyadditionsprodukte werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten. Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Bevorzugt weisen die zelligen Polyisocyanat-Polyadditionsprodukten einen Druckverformungsrest kleiner 25 % nach DIN 53572, wobei als Prüfkörper Würfel der Abmessung 40 mm x 40 mm x 30 mm ohne Silikonanstrich verwendet werden, die Prüfung bei konstanter Verformung erfolgt, wobei die Prüfkörper um 40 % zusammengedrückt und 22 Stunden bei 80 °C im Umluftschrank gehalten werden, die Prüfeinrichtung nach der Entnahme aus dem Wärmeschrank 2 Stunden im zusammengedrückten Zustand auf Raumtemperatur abgekühlt wird, anschließend der Prüfkörper aus der Prüfeinrichtung entnommen wird und 10 min ± 30 s nach der Entnahme der Prüfkörper aus der Prüfeinrichtung die Höhe der Prüfkörper auf 0,1 mm genau gemessen wird.

Der oder die Artikel (iv) befinden sich erfindungsgemäß in dem Raum zwischen dem äußeren Rand des Einlegers (i) und dem den Einleger umfassenden Gehäuse (ii). Die Aufgabe dieses Artikels (iv), bevorzugt des Ringes (iv) besteht darin, Schwingungen und Stöße des Stoßdämpfers zur Karosserie zu dämpfen und dadurch eine möglichst gute Entkopplung zu erzielen. Sinn der Entkopplung ist es, eine Geräuschübertragung zu minimieren.

Der Artikel (iv) ist erfindungsgemäß aus thermoplastischen Polyurethan (TPU) gefertigt. TPU sind dem Fachmann allgemein bekannt und kommerziell erhältlich. Die Herstellung geeigneter Ringe (iv) kann beispielsweise nach bekannten Verfahren z.B. mittels Spritzguss erfolgen. Erfindungsgemäß bevorzugt sind TPU mit einer Shore-Härte von 50 A bis 74 D . Durch diese Eigenschaft wird erreicht, dass in radialer Richtung eine dem Polyurethan gegenüber höhere Steifigkeit realisiert werden kann.

Der Artikel (iv) kann einen größeren Außendurchmesser haben als der Innendurchmesser der Gehäuses (ii). Dadurch wird eine Vorspannung des Elastomerbauteils, d.h. des Artikels (iv) erzielt. Bei dieser Bauweise kann auf einen anschließenden Kalibrierprozess verzichtet werden. Diese Vorteile gelten auch, wenn der Innendurchmesser des Elastomerbauteile kleiner ist als der Außendurchmesser des Einlegers (i). Bevorzugt weist der Artikel (iv) eine Höhe (xxv) von 10 mm bis 20 mm, besonders bevorzugt 15 mm auf. Der äußere Durchmesser (xxvi) des Artikels (iv) beträgt bevorzugt 50 mm bis 70 mm, besonders bevorzugt 58 mm. Der innere. Durchmesser (xxvii) des Artikels (iv) beträgt bevorzugt 45 mm bis 65 mm, besonders bevorzugt 52 mm.

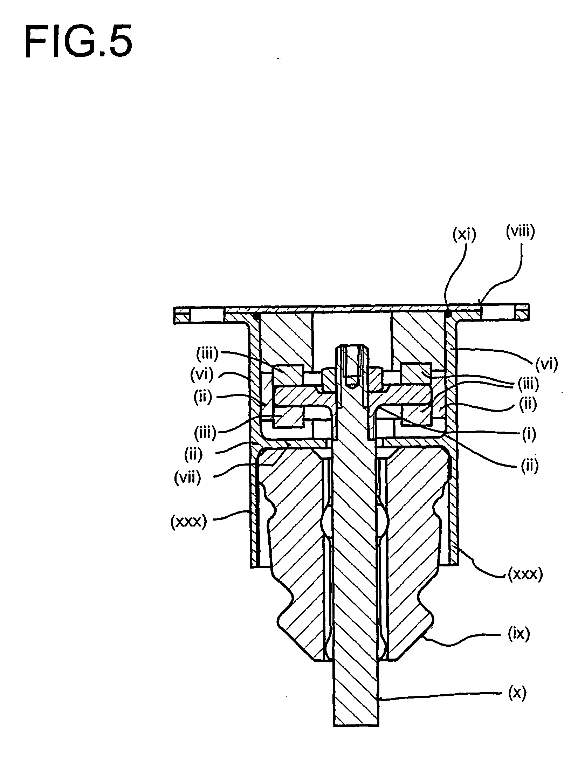

Eine bevorzugte Federkonstruktion ist in der Figur 5 skizziert. An dem vom Stoßdämpfer angewandten Ende der Kolbenstange ist bevorzugt mittels einer Mutter (v) der Einleger befestigt, zwischen dessen äußerem Rand und der Innenwand des Gehäuses (ii) sich der Artikel (iv) befindet. Der Rand des Einleger wird von den Lagerelementen (iii) oberhalb und unterhalb des Einlegers zwischen Deckel und unterem Rand des Gehäuses federnd gelagert. Die Zusatzfeder, die auf die Kolbenstange gesteckt ist, ist bevorzugt zwischen Stoßdämpfer und unterem Rand (vii) des Gehäuses (ii) positioniert und bevorzugt zumindest teilweise von einem in axiale Richtung weiterführenden Rand (xxx) des Gehäuses umschlossen. In axialer Richtung, d.h. in Richtung der Kolbenstange, trennt der untere Rand (vii) bevorzugt den Einleger (i), die Lagerelemente (iii) und den Artikel (iv) von der Zusatzfeder (ix), die bevorzugt an der von (i), (iii) und (iv) abgewandten Seite an dem unteren Rand (vii) anliegt. Der untere Rand (vii) weist bevorzugt eine Bohrung für die Kolbenstange (x) auf. Der seitliche Rand (vi) des Gehäuses (ii) umschließt den Einleger (i) und den Artikel (iv), der bevorzugt sowohl an den Rand (vi) als auch den Einleger (i) grenzt. Der Raum in dem Gehäuse (ii), in dem der Einleger (i) positioniert ist, wird bevorzugt von dem unteren Rand (vii), dem seitlichen Rand (vi) und dem Deckel (viii) begrenzt.

## Patentansprüche

1. Dämpferlager enthaltend mindestens einen Einleger (i), der in einem Gehäuse (ii) positioniert ist, mindestens zwei Lagerelemente (iii), die oberhalb und unterhalb des Einlegers (i) positioniert sind, **dadurch gekennzeichnet, dass** zwischen Einleger (i) und Gehäuse (ii) mindestens ein Artikel (iv) auf der Basis von thermoplastischem Polyurethan vorliegt.

2. Dämpferlager gemäß Anspruch 1, **dadurch gekennzeichnet, dass** die Lagerelemente (iii) auf zelligen Polyurethanelastomeren basieren.

3. Dämpferleger gemäß Anspruch 1, **dadurch gekennzeichnet, dass** die Lagerelemente (iii) auf zelligen Polyurethanelastomeren mit einer Dichte nach DIN 53420 von 200 bis 1100 kg/m³, einer Zugfestigkeit nach DIN 53571 von ≥ 2 N/mm², einer Dehnung nach DIN 53571 von ≥ 300 % und einer Weiterreißfestigkeit nach DIN 53515 von ≥ 8 N/mm basieren.

4. Dämpferlager gemäß Anspruch 1, **dadurch gekennzeichnet, dass** das thermoplastische Polyurethan des Artikels (iv) eine Shore-Härte von 50 A bis 74 D aufweist.

5. Federkonstruktion enthaltend eine Kolbenstange (x) an dessen Ende ein Einleger (i) befestigt ist, der sich in einem Gehäuse (ii) befindet, das einen seitlichen Rand (vi) und einen unteren Rand (vii) aufweist und dessen obere Öffnung teilweise oder vollständig verschlossen ist, sowie unterhalb des unteren Randes (vii) des Gehäuses eine hohle zylindrische Zusatzfeder (ix), die die Kolbenstange (x) umschließt, wobei oberhalb und unterhalb des Einlegers (i) jeweils mindestens ein Lagerelement (iii) positioniert ist, **dadurch gekennzeichnet, dass** zwischen dem Einleger (i) und dem seitlichen Rand (vi) des Gehäuses (ii) mindestens ein Artikel (iv) auf der Basis von thermoplastischem Polyurethan vorliegt.

6. Federkonstruktion gemäß Anspruch 5, **dadurch gekennzeichnet, dass** das Lagerelement (iii) und bevorzugt die Zusatzfeder (ix) auf zelligen Polyurethanelastomeren basiert.

7. Federkonstruktion gemäß Anspruch 5, **dadurch gekennzeichnet, dass** das Dämpfungselement (iii) und bevorzugt die Zusatzfeder (ix) auf zelligen Polyurethanelastomeren mit einer Dichte nach DIN 53420 von 200 bis 1100 kg/m³, einer zugfestigkeit nach DIN 53571 von ≥ 2 N/mm², einer Dehnung nach DIN 53571 von ≥ 300 % und einer Weiterreißfestigkeit nach DIN 53515 von ≥ 8 N/mm basiert.

8. Federkonstruktion gemäß Anspruch 5, **dadurch gekennzeichnet, dass** das thermoplastische Polyurethan des Artikels (iv) eine Shore-Härte von 50 A bis 74 D aufweist.

9. Automobile enthaltend Dämpferlager und/oder Federkonstruktion(en) gemäß einem der Ansprüche 1 bis 8.

## Claims

1. A damper top mount comprising at least one insert (i) which is positioned in a housing (ii), at least two bearing elements (iii) which are positioned above and below the insert (i), wherein, between insert (i) and housing (it), at least one article (iv) based on thermoplastic polyurethane is present.

2. The damper top mount according to claim 1, wherein the bearing elements (iii) are based on cellular polyurethane elastomers.

3. The damper top mount according to claim 1, wherein the bearing elements (iii) are based on cellular polyurethane elastomers having a density, according to DIN 53420, of from 200 to 1 100 kg/m³, a tensile strength, according to DIN 53571, of ≥ 2 N/mm², an elongation, according to DIN 53571, of ≥ 300% and a tear propagation strength, according to DIN 53515, of ≥ 8 N/mm.

4. The damper top mount according to claim 1, wherein the thermoplastic polyurethane of the article (iv) has a Shore hardness of from 50 A to 74 D.

5. A spring construction comprising a piston rod (x) at whose end an insert (i) is fastened, which insert is present in a housing (ii) which has a lateral edge (vi) and a lower edge (vii) and whose upper opening is partly or completely closed, and, below the lower edge (vii) of the housing, a hollow cylindrical overload spring (ix) which encloses the piston rod (x), at least one bearing element (iii) each being positioned above and below the insert (i), wherein an article (iv) based on thermoplastic polyurethane is present between the insert (i) and the lateral edge (vi) of the housing (ii).

6. The spring construction according to claim 5, wherein the bearing element (iii) and preferably the overload spring (ix) are based on cellular polyurethane elastomers.

7. The spring construction according to claim 5, wherein the vibration-absorbing element (iii) and preferably the overload spring (ix) are based on cellular polyurethane elastomers having a density, according to DIN 53420, of from 200 to 1 100 kg/m³, a tensile strength, according to DIN 53571, of 5≥ 2 N/mm², an elongation, according to DIN 53571, of ≥ 300% and a tear propagation strength, according to DIN 53515, of ≥8 N/mm.

8. The spring construction according to claim 5, wherein the thermoplastic polyurethane of the article (iv) has a Shore hardness of from 50 A to 74 D.

9. An automobile comprising damper top mounts and/or spring construction(s) according to any of claims 1 to 8 .

## Revendications

1. Paliers amortisseurs comprenant au moins un élément d'insertion (i) qui est positionné dans un logement (ii), au moins deux éléments de palier (iii) qui sont positionnés au-dessus et en dessous de l'élément d'insertion (i), **caractérisés en ce qu'**au moins un article (iv) à base de polyuréthanne thermoplastique se trouve entre l'élément d'insertion (i) et le logement (ii).

2. Paliers amortisseurs selon la revendication 1, **caractérisés en ce que** les éléments de palier (iii) sont à base d'élastomères de polyuréthanne cellulaires.

3. Paliers amortisseurs selon la revendication 1, **caractérisés en ce que** les éléments de palier (iii) sont à base d'élastomères de polyuréthanne cellulaires ayant une masse volumique selon DIN 53420 de 200 à 1100 kg/m³ une résistance à la traction selon DIN 53571 de ≥ 2 N/mm², un allongement selon DIN 53571 de ≥ 300 % et une résistance à la propagation du déchirement selon DIN 53515 de ≥ 8 N/mm.

4. Paliers amortisseurs selon la revendication 1, **caractérisés en ce que** le polyuréthanne thermoplastique de l'article (iv) présente une dureté Shore de 50 A à 74 D.

5. Construction à ressort comprenant une tige de piston (x) à l'extrémité de laquelle est fixé un élément d'insertion (i) qui se trouve dans un logement (ii) qui présente un bord latéral (vi) et un bord inférieur (vii) et dont l'ouverture supérieure est partiellement ou totalement fermée, ainsi qu'en dessous du bord inférieur (vii) du logement, un ressort supplémentaire (ix) cylindrique creux qui entoure la tige de piston à (x), au moins un élément de palier (iii) étant à chaque fois positionné au-dessus et en dessous de l'élément d'insertion (i), **caractérisée en ce qu'**au moins un article (iv) à base de polyuréthanne thermoplastique se trouve entre l'élément d'insertion (i) et le bord latéral (vi) du logement (ii).

6. Construction à ressort selon la revendication 5, **caractérisée en ce que** l'élément de palier (iii) et de préférence le ressort supplémentaire (ix) sont à base d'élastomères de polyuréthane cellulaires.

7. Construction à ressort selon la revendication 5, **caractérisée en ce que** l'élément amortisseur (iii) et de préférence le ressort supplémentaire (ix) sont à base d'élastomères de polyuréthanne cellulaires ayant une masse volumique selon DIN 53420 de 200 à 1100 kg/m³, une résistance à la traction selon DIN 53571 de ≥ 2 N/mm² un allongement selon DIN 53571 de ≥ 300 % et une résistance à la propagation du déchirement selon DIN 53515 de ≥ 8 N/mm.

8. Construction à ressort selon la revendication 5, **caractérisée en ce que** le polyuréthanne thermoplastique de l'article (iv) présente une dureté Shore de 50 A à 74 D.

9. Automobile comprenant des paliers amortisseurs et/ou une (des) construction(s) à ressort selon l'une des revendications 1 à 8.
